# EUROPEAN PATENT SPECIFICATION

(11) **EP 2 310 229 B1**
(45) Date of publication and mention of the grant of the patent: **19.03.2014**
(21) Application number: 09736498.8
(22) Date of filing: 06.08.2009
(51) Int. Cl.: B60Q 3/02, B60H 1/00, F16B 21/04

(54) **MONTAGE LOCKED ACCESSORIES SET FOR VEHICLE CEILING**
ZUBEHÖRSET FÜR EIN FAHRZEUGDACH MIT MONTAGESPERRE
ENSEMBLE D ACCESSOIRES VERROUILLÉ AU MONTAGE ET DESTINÉ AU PLAFOND D UN VÉHICULE

(30) Priority: 07.08.2008 TR 200805870
(43) Date of publication of application: 20.04.2011
(73) Proprietor: Farhym Otomotiv Sanayi Ve Ticaret Limited Sirketi, Akyurt / Ankara (TR)
(72) Inventor: TEKBA , Ersin, Akyurt / Ankara (TR); ALICI, Evren, 41480 Sekerpinar Gebze/KOCAELI (TR); BOETZELEN, Rudolph H., P.O.Box 1265 (DE)
(74) Representative: Handanoglu, Erdal
(86) International application number: PCT/TR2009/000098
(87) International publication number: WO 2010/016813

(56) References cited:
- DE-A1-102006 016 277
- GB-A- 2 093 578
- US-A- 3 964 364
- US-A- 4 007 516
- US-A- 4 686 609

## Description

### Subject of the Invention

The present invention relates to an accessory set, which facilitates the assembly and disassembly of accessories such as the overhead passenger reading lamp, ventilation panel, especially in the buses, increases the number of times such procedures may be repeated without causing damage in the covering, and covers the assembly equipment and assembly holes, thereby providing a more aesthetic appearance.

### Prior State of Art

Today, in particular, the buses preferred for the long-time travels are equipped with many accessories to enable a more comfortable and smooth travel for the passengers, including the overhead reading lamp, ventilation mechanism, host/hostess warning lamp, etc.

However, the assembly stages are time consuming and difficult for these products, which are located in alignment with the passenger seat in a manner assembled onto the vehicle ceiling, in addition to the exposed assembly points of such products which have an unaesthetic appearance.

According to the prior state of art, the assembly of such accessories is performed in two different ways, namely the assembly with screws and the assembly with clips. However, each of these assembly methods has some disadvantages.

For instance, in the assembly procedure performed with screws, it is extremely troublesome to mount the individual screws, which are fairly small in size. Therefore, it leads to time and labor loss.

In addition, following the completion of the assembly procedure, a plug is additionally mounted on each screw in order to hide the exposed screws. However, said plugs are so small parts that they may easily fall and become lost during the assembly, and their assembly causes extra loss of labor. Further, the plugs used to resolve the problem of aesthetic appearance caused by the screws are perceptible in the form of protuberances on the surface at the points of assembly of the product, hence the problem of aesthetic appearance led to by the screws may not be solved completely.

The document numbered US 4,686,609 discloses a ceiling accessory set including a vehicle interior light which is mounted to the ceiling by using screws. As known from the current state of art the screw heads are not covered in this system when the handle is in use.

In the system with clips, the assembly procedure is easier compared to the system with screws; however, it has been observed that the accessory sets assembled in this manner lead to functional disorders with time, the ends of the clips at the assembly points of the product become deformed, thus the assembly of the product becomes loose and even the products may become dislocated with time. For these reasons, the systems with clips are usually not preferred.

In addition to all the aforementioned, said accessories that are aimed to be used for long years are repeatedly removed and fitted for such reasons as failure, cleaning, etc. However, the aforesaid systems are not suitable for the repetitive assembly and disassembly processes. As a result of the repeated assembly and disassembly processes, the screw slots become loose after a certain while in the system with screws, and the clips' ends become deformed in the system with clips.

With the vehicle ceiling accessory set having an assembly lock, which is the subject matter of the invention, it is aimed to avoid all such disadvantages encountered in the prior state of art.

### Description of the Invention

The accessory set according to the invention as defined by the features of claim 1 is based on the principle of the realization of the assembly of the accessories such as ventilation panel, reading lamp, which are used especially in the buses, in an easier and faster manner with minimum labor, and the provision of a more aesthetic appearance for the product by way of hiding the exposed assembly slots (9) by means of the covers (3) fixed to the product by means of joints. Owing to this invention, the process involving the use of any assembly equipment like the screws and clips is eliminated.

The accessory set according to the invention is made of hard plastic, wherein there are two specially designed lock pins (1) located at a vertical position on the inner edges of the lower body (2), which edges are referred to as the assembly slots (9), and again on the lower body (2), there are holding ratchets (8) with a flexible structure and a protruding shape, inside which the lock pin (1) is placed and fixed.

Moreover, said accessory set comprises two specially designed side covers (3) providing a more aesthetic appearance for the product, which are fastened to the product via joints and which, once the assembly has been completed, cover the lock pin (1) and the assembly holes (10).

The lock pins (1) present in said accessory set comprise three portions, namely the bottom (5), the middle (6) and the top (7).

The function of the top portion (7) having restricting fins (feathers) (11) with a wavy structure is to perform the preliminary securing of the product by way of engagement of the restricting fins (11), which have a geometric shape in harmony with the slot (9), into the assembly slot (9), when the product is placed into the assembly slot (9). In addition, when the lock pin (1) is rotated by 90 degrees, the middle portion (6) of the lock pin (1) bears against the flexible holding ratchets (8) and the restricting fins (11) are locked into the slot (9), thereby enabling the product to be locked into the assembly slot (9).

The function of the middle portion (6), also called the locking zone, is, owing to its specially designed geometric shape resembling a rectangle, to bear against the holding ratchets (8) when the lock pin (1), for which the preliminary securing has been completed, is rotated by 90 degrees and to limit the movement angle of the restricting fins (feathers) (11) located in the top portion (7) to 90 degrees and to enable the product to be locked into the slot (9).

After the assembly, the bottom portion (5) that remains on the outer surface of the assembly slot (9) has an allen form, the function of said bottom portion is to enable the assembly of the product, which has been placed into the assembly slot (9), to said slot (9) by means of the allen wrench.

In this system, first the side covers (3) fixed to the products via joints are opened, and the accessory set is placed onto the slideway where it is to be mounted, referred to as the assembly slot (9), on the covering made of aluminum sheet (4). In this step of the assembly process, owing to the flexible structure of the holding ratchets (8) present in the product, at the instant the product is placed into the assembly slot (9), the rectangular middle portion (6) of the lock pin (1) engages into the slot (9) as seen in Figure-3a, the restricting fins (11) of the top portion (7) having a geometric shape in harmony with the slot (9) engages into the slot (9) as seen in Figure-4a. In this manner, the preliminary securing is achieved. Then, in order to strengthen the assembly of said product and to increase the assembly quality, the lock pin (1) is rotated by 90 degrees on its exposed bottom portion (5) having an allen structure by means of the allen wrench and as seen in Figure-4b, the restricting fins (feathers) (11) with a wavy structure that belong to the specially designed top portion (7) of the lock pin (1) are enabled to fit into the slot (9) and as seen in Figure-3b, the rectangular middle portion (6) is enabled to bear against the holding ratchets (8), thereby enabling the locking of the accessory set into the assembly slot (9). Finally, the side covers (3) with joints are closed to hide the assembly holes (10) in an aesthetic manner.

The accessory set according to the invention, which is easily assembled by means of an allen wrench, without using any assembly equipment such as screws or the like, may be easily disassembled following the same process steps, when necessary. Owing to this feature of the product, the assembly and disassembly procedures may be performed in a repetitive manner due to a failure, cleaning or for any other reason.

Also, thanks to the simple assembly work for said product set, the time and labor spent for the assembly are minimized. Owing to the covers (3) with joints, the possibility of dropping and becoming lost during or after the assembly or disassembly, which is encountered in the use of the plugs, is also eliminated. Since said covers (3) are fixed to the product via joints, they do not form a separate protruding appearance on the surface, thus the assembly holes (10) has a more aesthetic appearance on the surface. Further, the problem of inability to secure, encountered in the systems with clips, is also eliminated.

With the system according to the invention, even if the product is removed and mounted for many times, no deformation takes place.

The principles, the preferred embodiment and the manner of operation of the present invention have been disclosed in the patent description above. However, this invention, for which it is aimed to provide protection, must not be interpreted to be limited to only the assembly of the bus accessories. The embodiment disclosed herewith must be considered to be explanatory, rather than restrictive. The variations and changes, which may be implemented also in the vehicles other than buses, may be made and the equivalent components may be used by the others, without departing from the scope of the present invention. Consequently, it is intended to cover also such variations, changes and equivalents within the scope of the present invention as defined in the claims.

### Description of the Figures

Below is a description of the figures concerning the invention:
Figure-1a: The general top view of the accessory set with assembly lock
Figure-1b: The general side view of the accessory set with assembly lock
Figure-2a: The general top view of the lock pin
Figure-2b: The general side view of the lock pin
Figure-3a: Sectional view of the middle portion of the lock pin in a state in which the preliminary securing has been completed
Figure-3b: Sectional view of the middle portion of the lock pin in a state locked into the assembly slot
Figure-4a: Sectional view of the top portion of the lock pin in a state in which the preliminary securing has been completed
Figure-4b: Sectional view of the top portion of the lock pin in a state locked into the assembly slot
Figure-5a: Sectional view of the accessory set in a state in which the preliminary securing has been completed
Figure-5b: Sectional view of the accessory set in a state locked into the assembly slot and in which the assembly has been completed
Figure-6a: View of the side cover in an open state
Figure-6b: View of the side cover in a closed state

### Reference Numbers

- 1.: Lock pin
- 2.: Lower body
- 3.: Side cover
- 4.: Aluminum sheet covering
- 5.: Allen shaped bottom portion of the lock pin
- 6.: Middle portion of the lock pin (locking zone)
- 7.: Top portion of the lock pin
- 8.: Holding ratchets
- 9.: Assembly slot (slideway)
- 10.: Assembly hole
- 11.: Restricting fins (feathers)

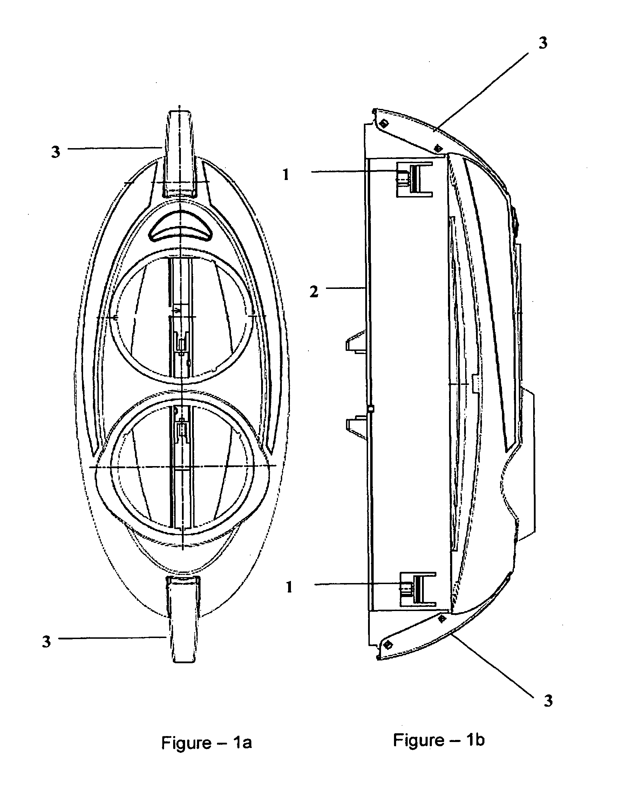

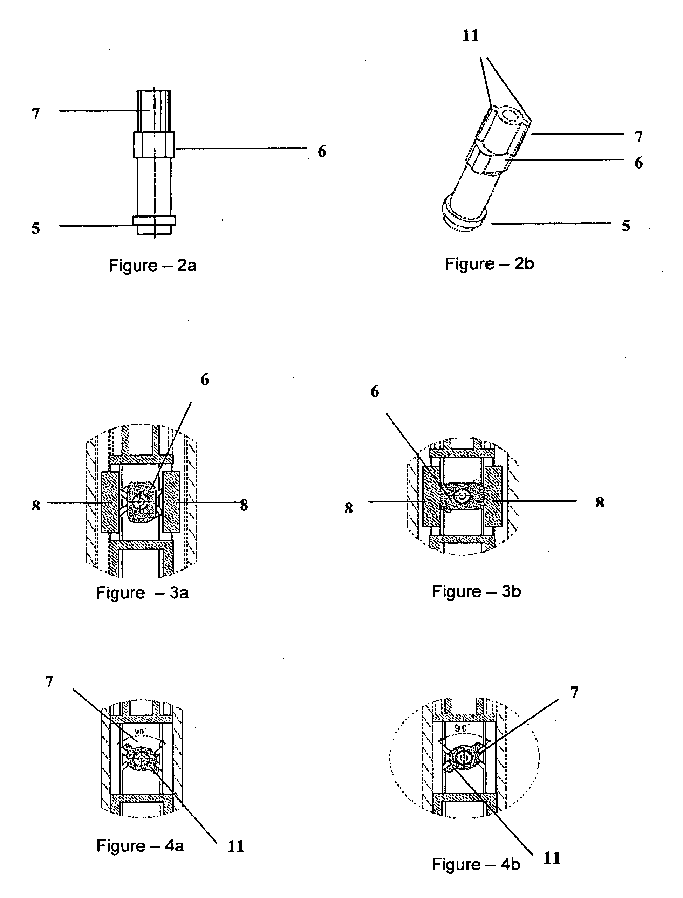

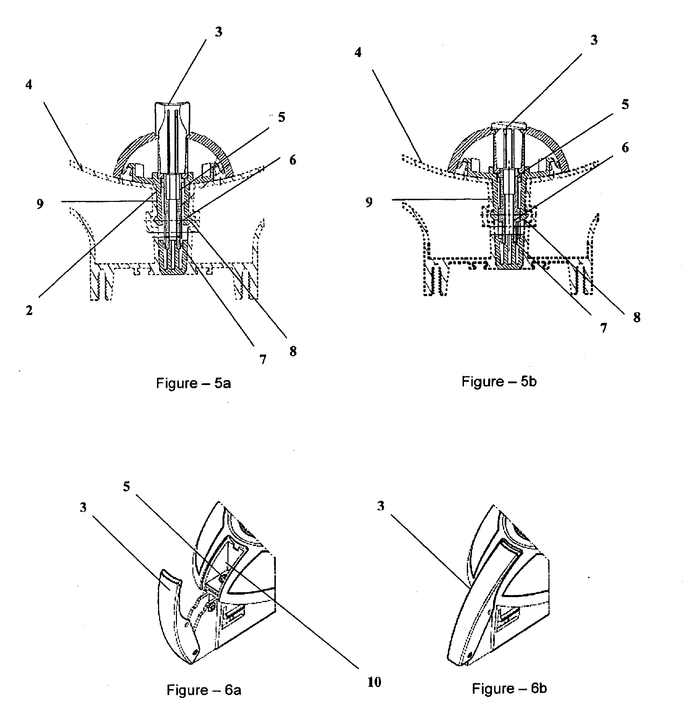

## Claims

1. The ceiling accessory set present especially in the buses, including the overhead passenger reading lamp and the ventilation panel; two specially designed lock pins (1) at a vertical position on the inner edges thereof, two holding ratchets (8) in which the lock pins (1) are placed, and two side covers (3) on the outer side surface **characterized in that** the mentioned side covers (3) are fastened to the ceiling accessory set from the outside by means of joints, such that they have a feature of being openable/closeable and they are located on the assembly holes (10).

## Patentansprüche

1. Der Deckenzubehör, besonders in Bussen vorhanden, die Overhead-Fahrgastleselampe und die Lüftungsblende, einschließlich der darunter befindlichen speziell entwickelten zwei Sperrbolzen (1) in einer vertikalen Position an den Innenkanten, zwei Halteratschen (8), in der die Verriegelungsstifte (1) angeordnet sind und zwei Seitendeckeln (3) an der äußeren Seitenfläche, **dadurch gekennzeichnet, dass** die genannten Seitenbleche (3) an den Deckenzubehör von außen mittels Gelenken befestigt sind, so dass sie geöffnet und geschlossen werden können und sie befinden sich an den Montagelöchern (10).

## Revendications

1. L'ensemble de l'accessoire au plafond présent en particulier dans les bus, lampe de lecture de tête du passager et panneau de ventilation; comprenant deux goupilles de verrouillage spécialement conçus (1) à une position verticale sur les bords intérieurs de ceux-ci, deux cliquets de maintien (8), dans laquelle les goupilles de verrouillage (1) sont placés, et deux couvercles latéraux (3) sur la surface latérale extérieure **caractérisés en ce que** les couvercles latéraux mentionnés (3) sont fixés à l'accessoire fixé au plafond de l'extérieur au moyen de joints, telle sorte qu'ils aient une caractéristique d'être ouvrable / fermable et ils sont situés sur les trous d'assemblage (10).
